# EUROPEAN PATENT APPLICATION

(11) **EP 1 818 281 A1**
(43) Date of publication of application: **15.08.2007**
(21) Application number: 06123436.5
(22) Date of filing: 03.11.2006
(51) Int. Cl.: B65F 1/14

(54) **System and method for the collection or transport of materials, such as trash**

(30) Priority: 02.02.2006 IT AP20060027
(71) Applicant: Acegas-Aps, Spa, 34123 Trieste (IT); Generali, Luclano, 34123 Trieste (IT)
(72) Inventor: Generali, Luciano, 34100, Trieste (IT); Bozic, Marino, 34100, Trieste (IT); Giacomini, Massimo, 34137, Trieste (IT)
(74) Representative: Petraz, Gilberto Luigi

(57) **Abstract**

The system comprises a plurality of first control devices (12,112), each associated with a corresponding container (11), and comprising one or more sensors able to detect information relating to the materials contained in the corresponding container (11). Each control device (12,112) also comprises a processing unit able to process locally the information provided by the sensors, in order to generate processed data, a transceiver unit able at least to transmit the data processed by the processing unit to an operating center (23), directly or by means of a second control device (21) mounted on a vehicle (30) suitable for the collection and transport of the materials. An autonomous energy feed group is associated with each first control device (12,112) and is provided with electric accumulation members, photovoltaic members to charge the electric accumulation members and at least an electric condenser that is connected alternately and selectively either to the electric accumulation members or to the photovoltaic members.

## Description

### FIELD OF THE INVENTION

The present invention concerns an apparatus and a method for the collection of materials, particularly trash, or for the movement of goods or materials contained in containers of various type, based on information concerning the materials in the containers, which information is detected by a remote detection sensor, associated with each container.

### BACKGROUND OF THE INVENTION

It is known to collect trash in urban areas, dividing the area into sectors and assigning the trash-collection vehicles periodically to empty and collect the trash from containers of one or more sectors.

The trash containers are of different types, such as skips, bins or other, and of different sizes depending on the type of trash, and can be provided with electric control units, able to identify the insertion of the trash, the weight of the trash, and also to identify the user who inserts the trash. This data is then processed by an operating center, for tax and statistical purposes. The electronic units are fed by solar cells which, however, do not guarantee functioning in conditions of poor lighting, or by batteries which, however, have to be subjected to frequent recharging or maintenance operations.

The vehicles that collect the trash may be equipped with communication systems to communicate with the operating center and possibly correct the route of the collection service.

Known collection cycles have the disadvantage that they do not take into account possible overloads of trash in the containers, which may accumulate even in a short time, for example during holiday periods.

On the other hand, in periods when the urban areas are less populated, the speed at which the trash accumulates slows down, and therefore the trash-collection vehicles, which collect the trash with a substantially constant frequency throughout the whole year, do not operate with the containers fully loaded with trash, with an evident waste of resources.

Purpose of the present invention is to achieve an apparatus and perfect a method for the collection or movement of materials, such as trash or other, which allows to monitor the real state of the materials in the individual containers in the urban area concerned in the collection service, and to involve the lowest possible number of trash-collection vehicles, that is, only those strictly necessary, according to the actual quantity and state of said materials, which is economical, also in terms of energy and manpower and which also has a prolonged operating life.

The Applicant has devised, tested and embodied the present invention to overcome the shortcomings of the state of the art and to obtain these and other purposes and advantages.

### SUMMARY OF THE INVENTION

The present invention is set forth and characterized in the main claims, while the relative dependent claims describe other characteristics of the invention or variants to the main inventive idea.

In accordance with the above purpose, an apparatus for the collection or movement of materials such as trash or other, contained in at least one or more containers, comprises at least a first control device mounted in each container and having sensor means to detect information relating at least to the materials in the relative container, such as for example the level of the materials in the container, or other information according to needs.

According to a characteristic feature of the invention, each first control device is provided with first electronic processing means, able to process locally the information detected by the sensor means in order to generate processed data. The first control device is also provided with first transceiver means able at least to transmit the data processed by the processing means to an operating center, directly or by means of a second control device mounted on a vehicle suitable to collect and transport the materials.

Moreover, each first control device comprises feed means able to feed electrically the various electric components of the corresponding first control device and comprising:
- electric accumulation means;
- photovoltaic means able to charge, directly or indirectly, the electric accumulation means; and
- at least an electric condenser able to be alternately and selectively connected, in parallel, for example by means of a switch, either to the photovoltaic means or to the electric accumulation means.

One advantage of the invention is that it allows to monitor the real state of the trash in the individual containers of the urban area concerned in the collection service, and to involve the lowest possible number of trash-collection vehicles, that is, only those strictly necessary, according to the actual quantity and state of said materials, which is economical, also in terms of energy and manpower and which also guarantees a prolonged operating life. Advantageously, in fact, the electric feed means thus achieved has a very prolonged duration of feed, which exceeds for example two years without needing maintenance.

According to an advantageous feature of the present invention, the sensor means comprises an ultrasound measuring device, able to detect the value of the level of materials inside the container. The use of the ultrasound measuring device advantageously allows to obtain a precise measurement of the level of the materials in the container, efficiently and cheaply. The ultrasound measuring device advantageously exploits the echo of a signal emitted by an ultrasound generator, in order to measure the level of the materials. The first processing means is able to measure, in an innovative manner, the time interval between emission and return of the ultrasound signal, and to measure the level of the materials. The ultrasound measuring device advantageously provides a continuous indication of the level and/or that the maximum threshold of the level of the materials has been reached.

According to an advantageous feature of the present invention, the sensor means comprises one or more sensors chosen from a group comprising temperature sensors, weight sensors or gravimeters, extensometers, accelerometers, gas detection sensors for monitoring the external environment.

Advantageously therefore, it is possible to monitor the state of the materials and of the relative container, detecting a wide spectrum of parameters and information, also relating to the territory. Advantageously, the present invention allows to weigh the container adequately, so as to be able to communicate efficiently the weight thereof to the second control device on the trash-collection vehicle, and, through this, to the operating center, and to correlate the information of weight with the information of level of the materials, so as to be able to assess, also statistically, the density of the materials and hence their type. Advantageously, the temperature sensor communicates the temperature inside the container to the second control device on the vehicle and from here the information reaches the operating center, allowing a preventive and timely intervention in the event of a fire starting.

Advantageously, the accelerometer is able to provide information on the opening of the lid of the container and the emptying of the container; in this way it is possible to supply information to the second control device, and from here to the operating center, on whether the container has been emptied, the number of times the lid has been opened and hence the number of filling operations performed, whether the lid has been opened and hence possible malfunctioning of the lid.

According to another advantageous feature of the present invention, the gas detection sensor means allows to measure and record the concentration of CO₂, CO and NOₓ gases in the environment, so as to make an efficient territorial monitoring. Advantageously, moreover, the gas detection sensor can detect other gases, such as ozone or others, according to the interests of the user who uses the invention or who contracts out the measuring. The insertion in the first control device of a sensor for CO₂, CO and Noₓ can supply to the body performing the service a series of data reliable and extended over time, concerning pollution from greenhouse gases.

Advantageously, by means of the sensor means, it is also possible to derive indirectly, or by means of suitable processing of the data detected, information relating to the possible blocked or broken lid and/or whether or not the bin has been washed.

According to one form of embodiment of the invention, the second control device comprises second transceiver means to communicate with each first control device and receive the processed data on the state of the materials and the relative container, and to transmit the information, so that it can be processed and/or centrally archived, to the operating center which manages remotely the cycle to collect the materials.

The second control device is also provided with geographical localization means, so as to advantageously supply an indication of the geographical location of the vehicle and, when the second control device is in geographical proximity with the first control device, an indication of the geographical location of the first control device and hence of the container.

The operating center comprises third transceiver means, to receive the data processed on the state of the materials and the indication of geographical location from the second control device and, when interrogated, from the first control devices of the main terminal.

The operating center is also provided with second processing means, to further process all the data on the state of the materials, so as to control and manage the cycle to collect the materials.

Advantageously, the first control devices are divided into groups, dependent on a first control device which functions as a main terminal and communicating therewith.

The first control device which functions as a main terminal, when interrogated by the operating center, is able to communicate directly with the operating center and with the respective control devices of its own group, in order to transmit the data processed.

According to another innovative feature of the present invention, the first control device comprises a clock unit that allows to program the switching on and off of the first control device in order to prevent energy being wasted during the periods of non-use.

According to another innovative feature of the present invention, the second transceiver means of the second control device comprises communication means able to allow the connection of the second control device and the operating center, in order to transmit the information in real time, even at a certain distance, from the vehicle that collects the materials to the operating center, for rapid processing of the information and, possibly, to make corrections or improvements during the cycle of collecting the materials.

Furthermore, the second control device is fed by an energy feed unit, advantageously integrated into the electric plant of the vehicle that transports the materials.

An innovative feature of the present invention is therefore represented by the system to collect and transmit data, the type of intelligent network used, the presence of different types of sensors able to supply information with regard to the levels of the rubbish, its weight and density or other information.

Advantageously, the apparatus according to the present invention uses in an innovative manner the sensor means, the intelligent processing unit equipped with an adequate memory, and also a high-performance, low-consumption radio system for communicating between the various control devices, in order to acquire information efficiently on the state of the materials, to process it and send it to the vehicle and from here to the operating center.

Advantageously, the present invention is provided with software programs that embody a dynamic data base able to manage in real time the information received and the activities to be performed, an automatic, cartographic updating software and a software able to auto-configure the network of control devices mounted in the containers, so that the data emitted by the control devices are channeled automatically to the operating center or to the vehicle that collects the materials, also if some control devices involved in the transit are broken or not operative.

In this way, we obtain an apparatus able to supply, in real time, the data relating to the service needs, so that the service logistics can assess the information obtained quickly and can actuate the most suitable measures to obtain an efficient and economical service, with the minimum possible production of pollutants.

Another advantageous innovation of the present invention is the low consumption of the apparatus, which can operate for years without maintenance of any kind.

The compactness and strength of the system are another advantageous feature of the apparatus according to the invention.

According to another advantageous feature of the present invention, the control apparatus does not cause a reduction in the number of workers employed for collecting the materials, but re-trains them and improves the quality of work done. This is because the workers are required to participate personally with their own choices and interpretations, and are no longer mere performers of a task. The quality and economics of the overall work are improved, since the workers are able to intervene in the system of collection, improving the performance thereof, according to the experience they have gained. Moreover, they can choose, for example suitable detours if a road is blocked, or a more suitable sequence of collection according to external factors that are not considered, nor can possibly be considered, in an information system, no matter how expert it is.

In this way, it is possible to prevent materials exceeding the volumetric capacity of the container from being deposited on the ground, and the container is always emptied when it is full of materials, that is, in the most efficient conditions for the means of transport and hence of the collection service.

The system allows to obtain an improvement to the ecological impact of the collection service. In fact, the collection vehicles do not stop to control the container, they interrogate it from a distance: the interrogation of the container is carried out when the collection vehicle is approaching, without needing to stop, advantageously at a distance of about 100 meters.

This modus operandi eliminates the risk of considerable traffic queues, and of heavy pollution caused by the waiting vehicles. Moreover, the operating center is able to select the collection vehicles which are not needed for service, with a consequent reduction in the consumption of fuel and reduced emissions of greenhouse gases and oxides into the air of the cities, already polluted by the emissions of CO₂, Noₓ, PM₁₀ and benzene.

The reduced use of the collection vehicles is advantageously expected to be 25% with respect to the normal use, and the consequent reduced wear and need for maintenance also lead to a reduction in maintenance costs, consumption of lubricants and the cost of disposing of the latter.

The apparatus according to the present invention also allows a better management of the vehicles in circulation which, dynamically, can be directed by the operating center to other containers in order to always maximize their load capacity.

Advantageously, the automatic publication of the state of service on the web allows those bodies that contract out the service to dispose of the materials to control the information on the state of service and the real efficiency and performance thereof.

The communication from the collection vehicle to the operating center also allows to transfer in real time the information on possible anomalies in the service to the management of the service. This information is able to be made available immediately to all the workers and collection vehicles, which can intervene and eliminate the anomalies. The historical service archive of each container can be used to attribute the costs of the service more accurately to each user or series of users, with further benefits in terms of rate making.

### BRIEF DESCRIPTION OF THE DRAWINGS

These and other characteristics of the present invention will become apparent from the following description of a preferential form of embodiment, given as a non-restrictive example with reference to the attached drawings wherein:
- fig. 1 is a block diagram of a method according to the invention;
- fig. 2 is a block diagram of a part of the method according to the present invention;
- fig. 3 is another block diagram of a part of the method according to the present invention;
- fig. 4 is a block diagram of a group of control devices of the apparatus according to the present invention;
- fig. 5 is a block diagram of a control device of the apparatus according to the invention;
- fig. 6 is a block diagram of another control device of the apparatus according to the present invention, associated with a vehicle;
- fig. 7 is a schematic representation of the apparatus according to the present invention;
- fig. 8 is a schematic representation of a part of the apparatus according to the present invention;
- fig. 9 is a schematic representation of another part of the apparatus according to the present invention;
- fig. 10 is a schematic representation of the control device that functions as the main terminal for each group in fig. 1; and
- fig. 11 is a schematic representation of the electric feed means of the control device in fig. 5.

### DETAILED DESCRIPTION OF A PREFERENTIAL FORM OF EMBODIMENT

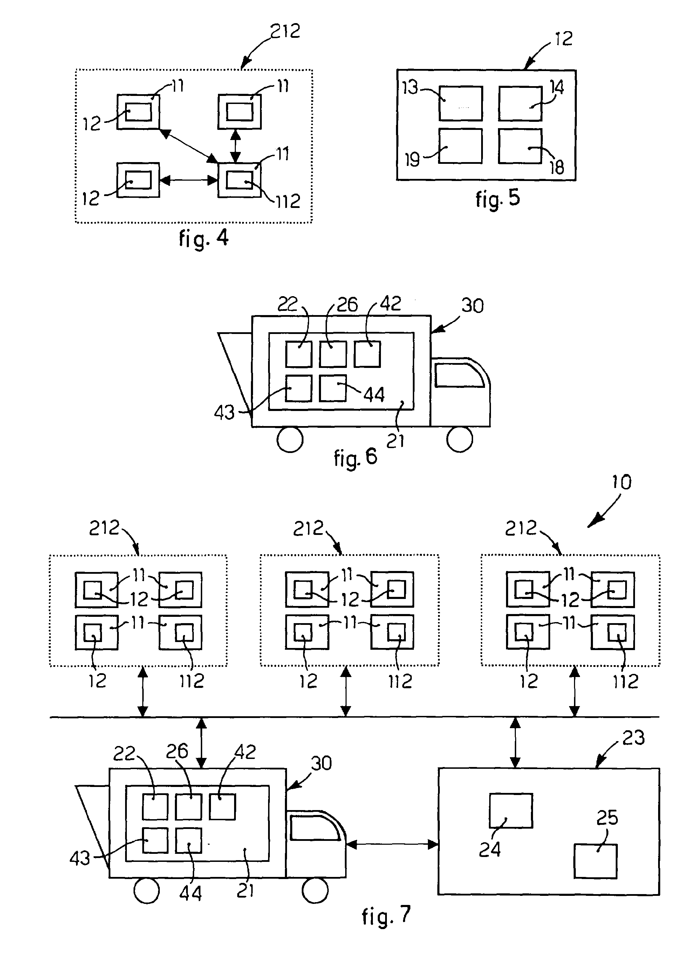

With reference to fig. 7, a control apparatus 10 to optimize the cycle of trash collection according to the present invention comprises a plurality of first control devices 12, each of which is mounted in a trash container or bin 11, and is able to detect information relating to the state of the bin 11 and the trash contained therein, for example the level. The first control device 12 is also able to process and transmit the information and data detected to a second control device 21, mounted on a vehicle 30 for the collection and transport of the trash, when it is interrogated by the second control device 21. Therefore, each first control device 12 is able to communicate in a bidirectional manner with the second control device 21 of each vehicle 30, in order to receive a request for information on the state of the trash, for example the level in the bin 11, and on the state of the bin 11 itself, and to reply to said request with the data detected and processed.

The apparatus 10 also comprises an operating center 23, which is suitable for the overall management of the trash-collection cycle. The operating center 23 is provided with a modem, of a known type and not shown in the drawings, a transceiver 24, to communicate with the outside, and an electronic calculator 25 to process and store the flow of data received, which can also be connected to the Company network and/or Internet, so as to allow an operator to manage the trash-collection cycle.

According to an advantageous form of embodiment of the present invention, the first control devices 12 are divided into groups 212 of first control devices 12, each corresponding to a sector of the urban area in which the trash-collection service is performed (figs. 4 and 7). In each group 212, only one of the first control devices 12, which for convenience is indicated here by the reference number 112, functions as a main terminal 112 and is the only one of the group 212 which is enabled to communicate with the operating center 23 (figs. 7, 9 and 10). In particular, each main terminal 112 is able to communicate, in bidirectional manner, both with the operating center 23 and also with the respective first control devices 12 of the group 212, to receive from the latter the processed data on the state of the trash and the bins 11, and to send said data to the operating center 23, when interrogated by the latter.

Therefore, the operating center 23 is able to communicate in bidirectional manner with each main terminal 112, to send a request to verify the state of the trash and the bins 11 and to receive a suitable reply therefrom. Moreover, the operating center 23 is also able to communicate in bidirectional manner with the second control device 21 of each vehicle 30, to send the data necessary for the trash collection, as found and processed by means of the request made by each main terminal 112, and to receive the data acquired by the second control device 21 of each vehicle 30 and relating to the specific bins 11 in geographical proximity with the vehicle 30.

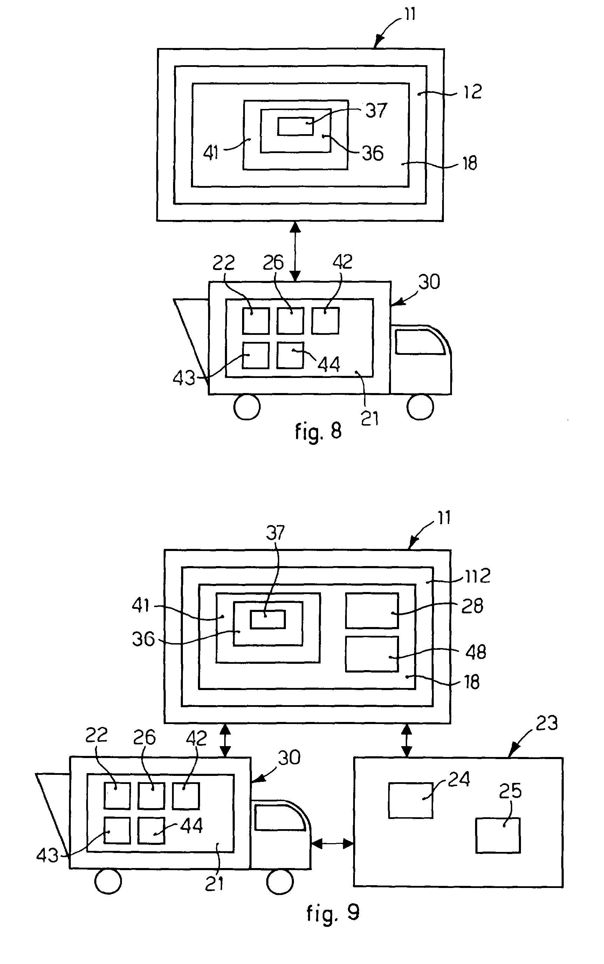

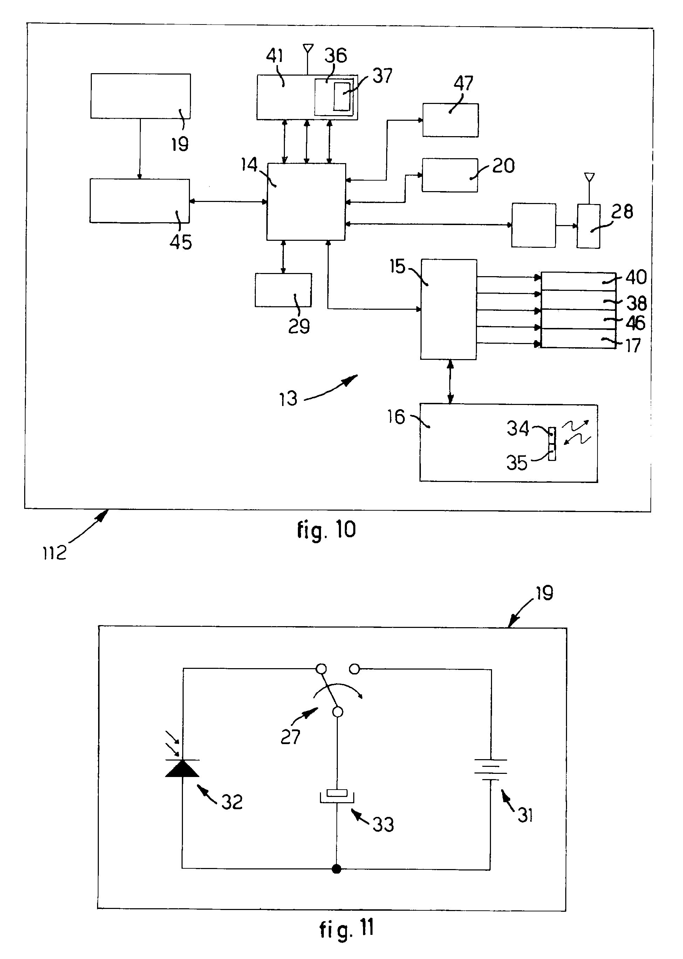

In figs. 9 and 10, a main terminal 112 is shown, in which the elements of the latter are also comprised in each first control device 12, except for a GSM or GPRS module 28, like an industrial GSM or GPRS telephone (mobile telephony) and a relative GSM- or GPRS-type communication interface 48, to communicate with the operating center 23, as will be described in detail hereafter in this description.

According to one feature of the present invention, each first control device 12, 112 comprises one or more sensors 13 (figs. 5 and 10), able to detect the information on the state of the trash and the bin 11.

Each first control device 12 also comprises at least a microprocessor unit 14, advantageously low voltage, for example 3.5 volt, and low consumption, which functions as a part to decide on and manage the communications, information and measurements detected by the sensors 13.

The microprocessor unit 14 is connected to a non-volatile memory 29 (fig. 10), for example but not only of the EPROM type, in which the serial number of the bin 11 and the first control device 12 are memorized, and also the chronology of the operations to empty the bin 11, with the date and time of the event.

The data and information are not only automatically downloaded to the second control device 21 present in the vehicle 30 every time the bin 11 is emptied, but also can remain available for a long period of time in the non-volatile memory 29, for example from six months to one year, and can be downloaded locally, for example by means of a portable computer or palmtop 43 suitably interfaced and associated with the second control device 21 (figs. 6 to 9).

On each first control device 12 there is also a unit 15 to condition the sensors 13 (fig. 10), which embodies the interface between the sensors 13 and the microprocessor unit 14, and allows to transfer the relative information. Thus, the signals supplied by the sensors 13 are transformed by means of operational amplifiers, impedance adaptors or other known devices, into signals that can be used by the microprocessor unit 14.

According to the present invention, the sensors 13 comprise at least an ultrasound level indicator 16, advantageously able to measure the level of the trash. In particular, the indicator 16 is of the low-consumption type and comprises a generator 34 able to generate the ultrasound signal and a receiver 35 able to receive the echo. The operational amplifiers that provide to amplify the return signal are fed with 5 volts. These strategies make the level indicator 16 simple and very economical in energy consumption.

The sensors 13 also comprise a thermistor 17, which allows to detect the temperature in the bin 11 and therefore to signal possible fires inside the bin 11 and quickly inform the operating center 23 of the event so that the necessary action may be taken.
Apart from the indicator 16 and the thermistor 17, the sensors 13 also comprise other sensors, such as an accelerometer 38, a gas sensor, a load cell 40 and an extensometer 46, which are used depending on the type of service that is to be performed.

The load cell 40 not only measures the weight of the trash contained in the bin 11, but is also able to assess the density of the materials or trash present, progressively with the increase in the level thereof and based on the value of the level detected by the indicator 16, whereas the accelerometer 38 is able to count the number of times the lid of the bin 11 is opened and hence the corresponding number of filling operations made and the possible emptying thereof. The accelerometer 38 allows to know, indirectly, if and when the bin 11 is washed, by means of the temperature data detected by the thermistor 17.

To communicate with the outside, each first control device 12, 112 comprises transceiver means 18 (figs. 8 and 9) able at least to transmit the information collected and processed by the microprocessor unit 14 of the first control device 12, 112 towards the vehicle 30 and/or to the main terminal 112 and, in the case of the main terminal 112, advantageously to the operating center 23 too. The transceiver means 18 comprises a 2.4 Ghz transceiver 41 for bidirectional communication with the second control device 21. Moreover, in the first control devices 12 which do not function as a main terminal 112, the transceiver 41 also allows communication with the main terminal 112 (fig. 8).

The transceiver 41 is able to communicate by means of radio waves with the main terminal 112 or the vehicle 30, over a short to medium range, that is, a few hundred meters, advantageously in a condition of radio visibility. The communication is substantially of the point-to-point type and embodied by means of packet transmission.

For example, the transceiver 41 is of the wireless radio type, bidirectional and 2.4 GHz, with 16 channels automatic search, baud rate 256 Kbit/s with internal correlator, range of about 100 meters, sensitivity of about -94 dB, protocol ZIG BEE, IEEE 802.15.4, or proprietor protocol, possibly used with extremely low consumption and equipped with stand-by and wake-up functions. The transceiver 41 can also operate, if necessary, with the Wi-Fi protocol.

Furthermore, in the case of the main terminal 112 (fig. 9), the transceiver means 18 also comprises the communication interface 48 and the module 28, for direct bidirectional communication with the operating center 23.

Moreover, the transceiver means 18 is provided with software to implement the self-configuration algorithms of the network, in order to obviate the presence of malfunctioning systems unable to transfer the information; as we said, in the case of the main terminal 112, it is also provided with the module 28 for the transmission of the concentrated data collected by the main terminal or node 112 to the operating center 23. The module 28 comprises a plurality of circuits, a suitable feeder and a series of interfaces, necessary to connect a GSM or GPRS unit to the main terminal 112, in order to achieve the automatic remote connections with the operating center 23, and to increase significantly the connection capacity of the main terminal 112.

As we said, the main terminal 112 communicates by means of the transceiver 41 with the first control devices 12 that belong to the same group 212, so as to obtain information relating to the state of the trash and of each bin 11 and send said information to the operating center 23 by means of the module 28.

This solution allows to achieve active system nodes able to transfer remotely, according to a request for the overall state of the trash as made by the operating center 23, or one or more requests for specific states as made by each second control device 21, the overall state of the system, for subsequent logistical assessment relating to the trash collection.

The transceiver 41 also allows the direct communication, both of the first control device 12 and also of the main terminal 112, with the vehicle 30 collecting the trash and which is able to recognize, without stopping along the route, which bin 11 is to be emptied and if it is present.

Again referring to the second control device 21 mounted on the vehicle 30, it comprises a microprocessor unit 42 (fig. 6) that connects with a 2.4 GHz transceiver 22, identical to the transceiver 41, in order to communicate with the bin 11, a GSM- or GPRS-type module 26 to connect with the operating center 23 and geographical localization means such as a GPS 44 associated with the second control device 21 of the vehicle 30. Furthermore, the second control device 21 also comprises the palmtop or portable computer 43 that interfaces in connection with the microprocessor unit 42; this connection can be made either by means of serial wireless communication, Wi-Fi, infrared, or by means of a suitable cable.

The microprocessor unit 42 also has an adequate data-memorization capacity, to collect data in the field.

The interface between the second control device 21 and the operator is entrusted to the palmtop 43, while feed to the second control device 21 advantageously arrives from the electric plant of the vehicle 30.

With every operation effected on the bin 11, such as emptying and/or washing, the date and time of the operation is memorized, the position of the bin 11 provided by the GPS 44, and the level of trash in the bin 11.

This information is also transmitted to the vehicle 30 which memorizes it in the second control device 21, so that the data can be downloaded daily at the end of service, at the operating center 23.

According to an advantageous embodiment of the present invention, the transceiver 41 of each first control device 12 comprises an active transponder 36 having, in particular, a signal receiver 37. The technical characteristics, of a generally known type, of the active transponder 36 allow to guarantee communication within a certain distance.

Communication by means of the active transponder 36 is allowed by the type of wide-spectrum transmission and reception, 16 commutable channels, 16-bit code, signal correlator and great sensitivity of the signal receiver 37. In particular, the capacity of the signal receiver 37 of the active transponder 36 to recognize signals intended for it, and its high settling speed, allow to use the active transponder 36 in an innovative manner. In fact, it is activated in reception for a time of a few milliseconds every second. This technique allows to keep the transceiver 41 active for an interval of time comprised between about 7 and 9 milliseconds for every second, allowing to obtain an advantageous ratio of use/pause with a value of about 1/150. In this time, the signal receiver 37 of the active transponder 36 is able to recognize the preamble signal, or header, possibly emitted by the second control device 21 of the vehicle 30. If it recognizes the specific header, the active transponder 36 remains switched on so as to verify whether a call is addressed to it and, if so, the trash-collection cycle continues. On the contrary, if the call is not addressed to the specific signal receiver 37, but to another signal receiver of another first control device 12, the specific signal receiver 37 again switches off.

According to an innovative feature of the present invention, the use of the active transponder 36 is advantageous because the transceiver 41 is equipped with a system to encode the data able to be removed from the background noise by a correlator circuit. This technology implies secure connections, low sensitivity to disturbances in the communications and with reduced transmission powers; at the same time it allows high-speed data transmission.

The transponder 36, as we said, can operate on 16 channels, which can therefore be commuted as desired during communication, in order to escape from disturbances or, if desired, from unauthorized interceptions and intrusions.

Considering consumption in operating conditions of the transponder 36 as about 20 milliamperes, we advantageously obtain an equivalent consumption of about 130 microamperes. Thanks to this low consumption, the first control device 12 can operate with recyclable energy sources and at the same time can keep its working autonomy high.

The first control device 12, 112 also comprises an RS232 type interface 47, which is used for programming and diagnostics.

According to another innovative feature of the present invention, each first control device 12, 112 comprises feed means 19 (figs. 10 and 11) for energy feed, which comprises a battery 31 charged by at least a condenser 33 of adequate capacity, in turn kept charged by a solar powered photovoltaic panel 32. Advantageously, the condenser 33 is of the high capacity type comprised between 5 and 50 Farad, for example about 10 Farad, or about 12 Farad. Each first control device 12, 112 also comprises an energy management device 45, connected to the battery 31 and the photovoltaic panel 32 (fig. 10), which manages not only the charging of the battery 31, readable remotely, but also the switching on and off of the unused parts.

At low lighting powers, on winter and/or cloudy days, the photovoltaic panel 32 is unable to deliver enough energy to charge the batteries 31. In conditions of poor lighting and when empty, that is, uncharged, the voltage of the photovoltaic panel 32 in any case increases up to its nominal value, whereas a charge, even a low one, makes it go down to values that cannot be used to feed the first control device 12.

Applicant has found in experiments that the condenser 33, advantageously even of high capacity, selectively located in parallel with the photovoltaic panel 32, is able in any case to be charged to the necessary nominal voltage, even in conditions of poor lighting, although after a certain period of time, guaranteeing a better use of the energy that can be delivered by the photovoltaic panel 32 even in disadvantageous conditions, such as a cloudy sky.

An advantageous feature of the feed means 19 is that high capacity condensers 33 are used, located selectively and alternately in parallel with the photovoltaic panel 32. When the condensers 33 reach the nominal voltage of the photovoltaic panel 32, they are disconnected from the photovoltaic panel 32, put in parallel with the battery 31 and partly "discharged" onto the battery 31.

Since the voltage of the photovoltaic panel 32 is greater than that of the battery 31 to be charged, the discharge current of the condenser 33 assumes values suitable for charging the battery 31.

The discharge process, however, makes the voltage of the condenser 33 go down to the level of the voltage of the battery 31. At this point the charge current is zero and the condenser 33 is therefore disconnected from the battery 31 by means of a switch 27, of a known type, and put in parallel with the photovoltaic panel 32, in order to be recharged to the nominal voltage of the latter; when this is reached, the cycle is repeated. In this way, it is even possible to charge condensers 33 of great capacity. Thus, the coefficients of irradiation which the photovoltaic panel 32 would not normally be able to convert into a current able to charge the battery 31, can be exploited to the utmost, allowing - although with a lower contribution - to maintain at least a minimum recharge, and thus obtaining a long autonomy of the first control device 12 fed.

The feed means 19 is protected from an excessive discharge of the condenser 33 because automatic disconnection is provided between the condenser 33 and the battery 31, until the photovoltaic panel 32 has recharged or partly recharged the condenser 33. This prevents the condenser 33 from coming to a premature end.

The feed means 19 also comprises an electronic circuit, not shown in the drawings, which provides to commute the connections of the condenser 33 depending on the voltage at its heads.

In collaboration with the microprocessor unit 14 and an RTC clock unit 20, the feed means 19 also manages the feed to the various parts of the first control device 12, 112, switching them off when not in use or adapting the required value of voltage thereof. In this way, we obtain a switching on/off system in time bands, which allows to save energy in the first control device 12, 112 and prolongs the duration of functioning thereof, in the event of poor sunlight and hence poor recharging of the battery 31.

This feed method allows to guarantee a long service for the battery 31, without maintenance, for even two or three years.

The feed means 19, the microprocessor unit 14, the transceiver means 18, the clock unit 20 and the indicator 16 can all be made on a single printed circuit, or can be made in modules, interconnected with each other according to known methods, as necessary.

The first control device 12, 112, the feed means 19 including the battery 31 and the photovoltaic panel 32, are advantageously housed in a box made of plastic material transparent to radiofrequencies, impermeable to infiltrations of water and liquids in general.

The first control device 12, 112 also comprises a plurality of counters, not shown in the drawings, which integrate the functioning of the sensors 13, also processing some information that is memorized in the non-volatile memory 29, such as a counter to count the openings, a read-only counter, a counter to count the tilting of the lid, which concerns the emptying of the bin 11, a counter to count the hours of work and hours of break, all programmable. The first control device 12 also comprises a device to signal the type of trash, programmable, and a device to signal the serial number, read-only.

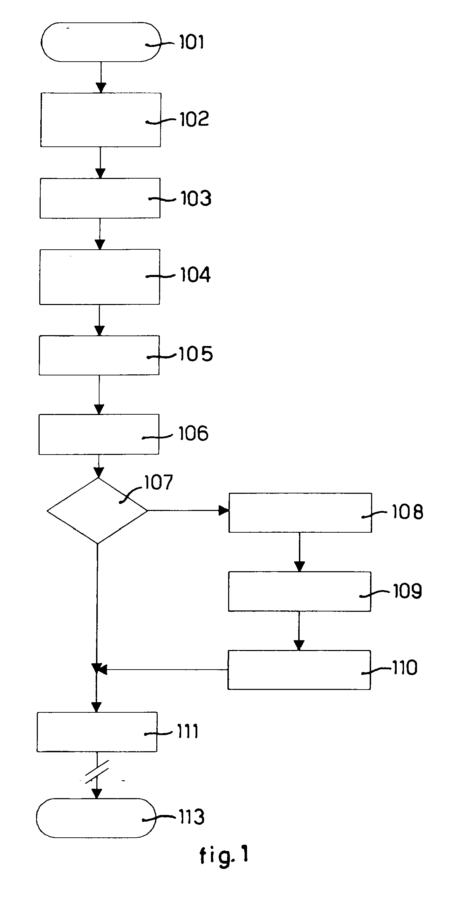

The functioning of the apparatus 10 as described heretofore will now be described, applied to a procedure to optimize the trash-collection cycle and with reference to the block diagrams in figs. 1 to 3, which describe the method, and figs. 4 to 9 which show parts of the apparatus 10 used.

The cycle is started when an operator at the operating center 23 requests the apparatus 10, that is, the main terminals 112 of each group 212, for the state of service of the trash and the relative bins 11, communicating by means of the transceiver 24. The request by the operating center 23 is made by means of a call to every main terminal 112 of each group 212, directed to the respective GSM or GPRS modules 28. Advantageously, the request can also be made automatic at programmed times or before the beginning of the collection service.

After receiving the request from the operating center 23, the main terminal 112 communicates by means of the transceiver 41 with a request to each first control device 12 of the respective group 212. Each first control device 12, by means of the respective sensors 13, detects the information concerning the state of the trash, and sends it as processed data to the main terminal 112.

After collecting the processed data and information from each first control device 12, each main terminal 112 of each group 212 replies to the operating center 23 by means of the module 28.

At the end of the communications between each group 212 and the operating center 23, the data relating to the state of the trash and the bins 11 are available to the operator, who processes them directly by means of the electronic calculator 25, or transfers them to the logistics department.

The operating center 23 processes all the data relating to the route and to the type of trash collection, decides how many vehicles 30 to send to collect the trash and which routes to follow, and sends this information to the selected vehicles 30.

Advantageously, the type of trash to be collected in the service is also selected, for example paper, wet trash, plastic material, glass or others.

In general, with reference to fig. 1, the collection starts with step 101, the start of trash collection, in which the vehicles 30 depart from the operating center 23, to arrive near the bins 11, step 102, following the route pre-selected by the operating center 23. Each of the vehicles 30, along its route, automatically interrogates the first control devices 12, 112 of the bins 11 in geographical proximity, by means of the respective second control device 21, step 103. After this, the second control device 21 of the vehicle 30 waits for a reply from the first control device 12 on the bin 11, step 104. Every time the vehicle 30 approaches one or more bins 11, the information possibly obtained by interrogating the first control devices 12, according to the type of trash for which the service in progress is intended, is memorized by the second control device 21, step 105, and displayed on the palmtop, step 106.

At this point, the driver of the vehicle 30 or another operator decides whether or not to empty the bin 11, decisional step 107, according to the information on the state of the trash in the bin 11 interrogated. If the decision is to empty, the necessary operations to empty the bin 11 are performed in a known manner. When these are finished, the bin 11 is replaced on the ground, and the second control device 21 transmits to the first control device 12 the confirmation that the bin 11 has been emptied, step 108. Subsequently, the reply from the first control device 12 is awaited, step 110, and the reply received is memorized, step 110, containing the useful information, such as for example: registration number, level of trash, weight, temperature, value of connected sensor, type of operation performed, emptying and/or washing, date and time of operation.

The geographical location of the bin 11, obtained by means of the GPS 44, is also associated with these data, received and memorized by the second control device 21 of the vehicle 30.

Afterwards, the route is followed towards another bin 11, step 111, and from here, repeating the cycle for the necessary number of times, the end of the trash-collection service is reached, step 113. If in step 107 the bin 11 was not emptied, the relative first control device 12 is returned to the stand-by state, and the vehicle 30 proceeds to step 111.

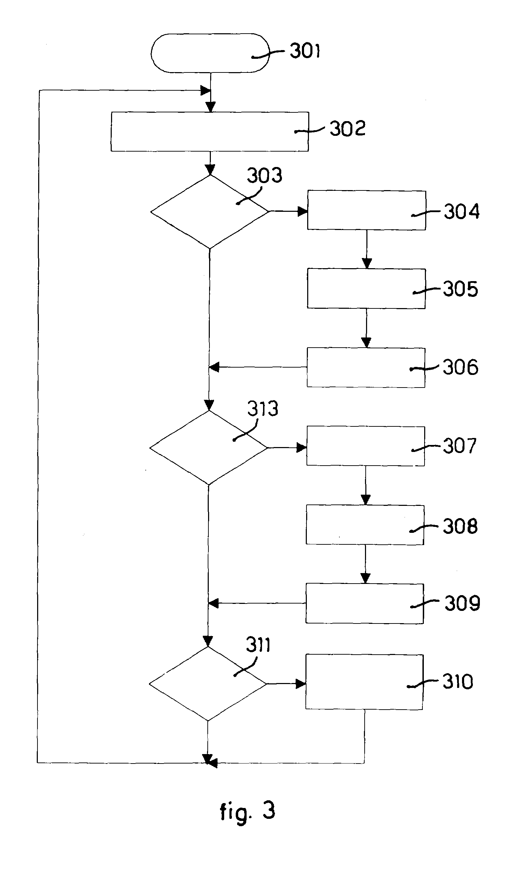

In particular, the first control devices 12, 112 are managed as described hereafter, with reference to fig. 3. Each first control device 12, 112 starts its activity, step 301, activating according to the programming received, step 302, to verify if a communication has been received from the second control device 21 of the vehicle 30 or the main terminal 112, step 303. If a communication has been received, the sensors 13 are activated, step 304, to detect the desired data, the state and the data detected by the sensors 13 are memorized, step 305, and reply is given to the second control device 21, step 306, or to the main terminal 112, according to who made the interrogation. In the event of interaction of the first control device 12 with the second control device 21, at this point there is a possibility of emptying the bin 11, step 313. If no communication has been received, the system can be forced and in any case a decision taken to empty the bin 11.

If the bin 11 has been emptied, the geographical position of the first control device 12 is updated, step 307, the fact that the bin 11 has been emptied is memorized, step 308, and communication is made of the memorized information to the second control device 21, step 309. Afterwards, the user or operator is identified, step 311, and the user code and state of the sensors 13 is memorized in the first control device 12, step 310; when this has been done, the first control device 12 is de-activated and returns to before step 302.

If the bin 11 is not emptied, in any case the presence and identification of a possible user or operator is verified, step 311, and then the first control device 12 is switched off, and we return to before step 302.

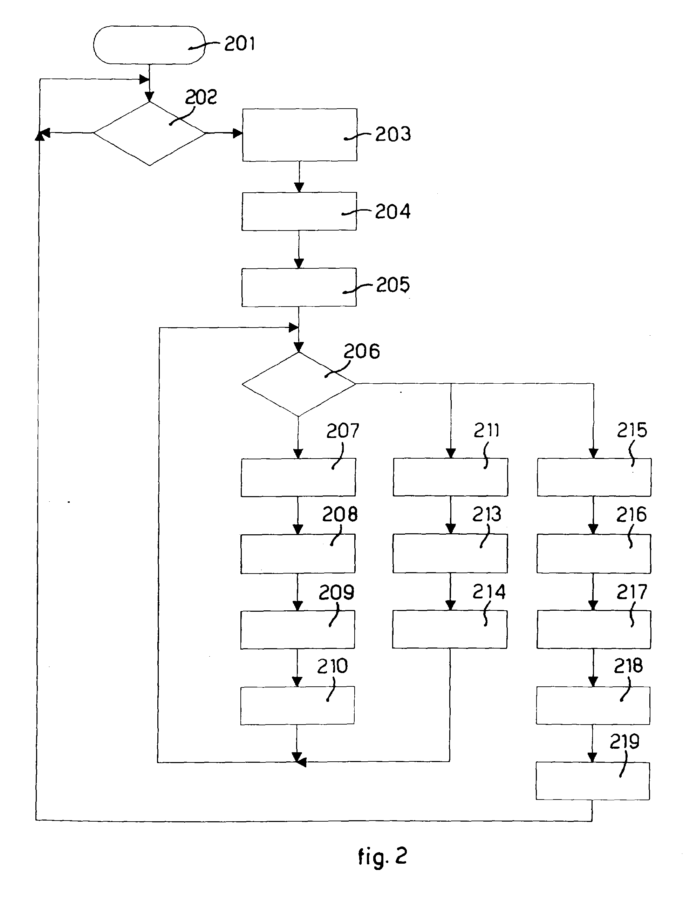

Finally, the second control devices 21 are managed as described hereafter with reference to fig. 2. There is a starting step 201, where we have a confirmation or not that the vehicles 30, provided with the second control devices 21, have started service, step 202. If not, the cycle waits for confirmation, or ends. If there is an affirmative answer, the identification of the operator on the second control device 21 in service is programmed, step 203, the identification of the destination is programmed, step 204, the type of trash is programmed, step 205. The operator can choose the type of command to be sent to the second control device 21, step 206.

If the second control device 21 of the vehicle 30 makes a state request to the first control device 12 of the bin 11, the request is sent, step 207, the request or a time out signal is received, step 208, and the reply or time out is subsequently memorized, step 209. This information is displayed by the portable computer or palmtop 43, step 210, for the operator, and then we return to step 206.

If a command to empty the bin 11 is given, confirmation thereof is sent by the second control device 21 to the first control device 12, step 211. Afterwards, a reply or a time out signal is received, step 213, and the state of emptiness of the bin 11 is memorized on the second control device 21, step 214, and then we return to step 206.

If it is decided to return to the operating center 23, the vehicle 30 enters the operating center 23, step 215 and, for example during its passage through the gateway, or in another desired position, the second control device 21 of the vehicle 30 transmits to the electronic calculator 25 of the operating center 23 the data memorized during the trash-collection cycle, step 216, thus updating the data bases of the operating center 23 and advantageously also updating the state of the service as published on the web.

The Company that performs the trash collection and the possible client will therefore be progressively updated on the state of the trash-collection service. Furthermore, we shall have confirmation of the correct reception of the data at step 217 and subsequent cancellation of the data memorized n the second control device 21, step 218, ending the service, step 219 and returning to before step 202.

It is clear that modifications and/or additions of parts and/or steps may be made to the apparatus and method to collect or move materials as described heretofore, without departing from the field and scope of the present invention.

For example, according to a variant, the first control devices 12, 112 may be suitable to communicate with each other by means of said short-to-medium range transmission so as to embody a radio link, by means of which each first control device 12, 112 can communicate with the operating center 23, indirectly, or by means of the other first control devices 12, 112, and transmit the relative processed data. In particular, according to this variant, the data processed locally by a single first control device 12, 112 are transmitted to at least another first control device 12, 112 belonging to the same radio link, which retransmits them in turn to another first control device 12, 112 of the same radio link, and so on, to the operating center 23. Each radio link can consist of all the types of first control device 12, 112, or of the main terminals 112 alone.

It is also clear that, although the present invention has been described with reference to some specific examples, a person of skill in the art shall certainly be able to achieve many other equivalent forms of apparatus and method to collect or move materials, having the characteristics as set forth in the claims and hence all coming within the field of protection defined thereby.

## Claims

1. Apparatus for the collection or movement of materials contained in one or more containers (11), comprising a plurality of first control devices (12, 112), each associated with a corresponding one of said containers (11), and comprising sensor means (13) able to detect information relating at least to said materials contained in the corresponding container (11), **characterized in that** each first control device (12, 112) also comprises:
- processing means (14) able to process said information locally in order to generate processed data;
- first transceiver means (18) able at least to transmit said processed data to an operating center (23), directly or by means of a second control device (21) mounted on a vehicle (30) suitable for the collection and transport of said materials; and
- electric feed means (19) that comprises:
- electric accumulation means (31);
- photovoltaic means (32) able to charge said electric accumulation unit (31), directly or indirectly; and
- at least an electric condenser (33) able to be connected alternately and selectively, in parallel, either to said photovoltaic means (32) or to said electric accumulation unit (31).

2. Apparatus as in claim 1, **characterized in that** each first control device (12, 112) also comprises at least a switch (27) able to connect said electric condenser (33) alternately and selectively either to said photovoltaic means (32) or to said electric accumulation unit (31).

3. Apparatus as in claim 1 or 2, **characterized in that** said sensor means (13) comprises an ultrasound measurement device (16), able to detect the level of said materials in said container (11).

4. Apparatus as in claim 1, 2 or 3, **characterized in that** said sensor means (13) comprises one or more sensors of a type chosen from a group comprising temperature sensors (17), accelerometers (38), gas detection sensors, gravimetric sensors (40).

5. Apparatus as in any claim hereinbefore, **characterized in that** said first control devices (12, 112), associated with the corresponding containers (11), are divided into a plurality of groups (212), wherein each of said groups (212) comprises a single first control device which functions as a main terminal (112) and is able to communicate in bidirectional mode both with said operating center (23) and also with a determinate number of first control devices (12) of its own group (212).

6. Apparatus as in claim 5, **characterized in that** said first transceiver means (18) of each of said first control devices (12, 112) comprises at least a first transceiver (41) to communicate both with said main terminal (112) and also with said second control device (21).

7. Apparatus as in claim 6, **characterized in that** said first transceiver (41) comprises an active transponder (36) provided with a signal receiver (37).

8. Apparatus as in claim 5, 6, or 7, **characterized in that** communication between said main terminal (112) and the first control devices (12) of its own group (212) occurs through radio waves, by means of short-to-medium range communication.

9. Apparatus as in claim 5, **characterized in that** the first transceiver means (18) of each main terminal (112) also comprises at least a first communication interface (28) to communicate with said operating center (23).

10. Apparatus as in claim 5 or 9, **characterized in that** communication between said main terminal (112) and said operating center (23) is of the bidirectional type and occurs by means of radio mobile telephony.

11. Apparatus as in any claim hereinbefore, **characterized in that** said second control device (21) mounted on said vehicle (30) comprises a second transceiver (22) to communicate with each of said first control devices (12, 112).

12. Apparatus as in any claim hereinbefore, **characterized in that** communication between each first control device (12, 112) and said second control device (21) mounted on said vehicle (30) is of the bidirectional type and occurs through radio waves, by means of short-to-medium range communication.

13. Apparatus as in any claim hereinbefore, **characterized in that** said second control device (21) mounted on said vehicle (30) also comprises a second communication interface (26) to communicate with said operating center (23).

14. Apparatus as in claim 5, **characterized in that** said operating center (23) comprises second transceiver means (24) to communicate both with said main terminal (112) and also with said second control device (21) mounted on said vehicle (30).

15. Apparatus as in any claim hereinbefore, **characterized in that** communication between said operating center (23) and said second control device (21) mounted on said vehicle (30) is of the bidirectional type and occurs directly by means of radio mobile telephony.

16. Apparatus as in claim 5, **characterized in that** each of said first control devices (12) is able to transmit said processed data to said operating center (23), by means of said first control device that functions as main terminal (112).

17. Apparatus as in any claim hereinbefore, **characterized in that** said second control device (21) comprises geographical localization means (44), able to supply an indication of the geographical location of said vehicle (30) both to said operating center (23) and also to said first control device (12, 112).

18. Method for the collection or movement of materials contained in a plurality of containers (11), wherein each container (11) is associated with a first control device (12, 112), and wherein said method comprises at least the following steps:
- to detect information relating at least to said materials contained in each container (11) by means of sensor means (13) comprised in said first control device (12, 112);
**characterized in that** it also comprises the following steps:
- to process said information locally in order to obtain processed data relating to the state of said materials by means of processing means (14) comprised in said first control device (12, 112);
- to effect at least a transmission of said processed data to an operating center (23), directly or by means of a second control device (21) mounted on a vehicle (30) suitable to collect and transport said materials;
- to collect or move said materials by means of said vehicle (30), according to at least said processed data; and
- to feed said first control device (12, 112) electrically by means of autonomous electric feed means (19).

19. Method as in claim 18, **characterized in that** said electric feed means (19) comprises photovoltaic means (32), electric accumulation means (31) which is electrically charged by means of said photovoltaic means (32), and at least an electric condenser (33) which is alternately and selectively connected, in parallel, either to said photovoltaic means (32) or to said electric accumulation means (31).

20. Method as in claim 18 or 19, **characterized in that** it further comprises the following steps:
- to transmit a request for information and processed data relating to said materials contained in said containers (11), from said operating center (23) to one of said first control devices which functions as main terminal (112);
- to transmit said information and processed data from said main terminal (112) to said operating center (23);
- to effect at least an analysis of said processed data at said operating center (23), so as to define information on the manner of performing said collection; and
- to transmit said information on the manner of performing said collection cycle from said operating center (23) to said second control device (21) mounted on said vehicle (30).

21. Method as in claim 20, **characterized in that** said first control devices (12, 112) are divided into a plurality of groups (212), each of which comprises said main terminal (112) which is provided with a communication interface (28) to communicate also with the operating center (23), and a determinate number of first control devices (12) wherein, when said main terminal (112) receives said state request, it effects a corresponding communication with each of the first control devices (12) of its own group (212) in order to receive from them the processed data and to transmit said data to the operating center (23).

22. Method as in claim 21, wherein each of said first control devices (12) comprises a transceiver (41) provided with an active transponder (36) comprising a signal receiver (37), so as to communicate both with said main terminal (112) and also with said second control device (21), **characterized in that** it further comprises the following steps:
- to switch on said signal receiver (37);
- to effect a receiving and recognizing operation, so that said signal receiver (37) is able to receive and recognize a header signal arriving from another transmission means (22) of said second control device (21), so as to verify whether said signal corresponds to a call specifically addressed to said signal receiver (37);
- to switch off said signal receiver (37), if said header signal does not correspond to a call specifically addressed to said signal receiver (37);
- to repeat said switching on operation, said recognition operation and said switching off operation at every interval of about 1 second.

23. Method as in claim 22, **characterized in that** the minimum interval of time between said switching on operation and said switching off operation is comprised between about 7 and 9 milliseconds.
